# EUROPÄISCHE PATENTSCHRIFT

(11) **EP 2 990 125 B1**
(45) Veröffentlichungstag und Bekanntmachung des Hinweises auf die Patenterteilung: **02.10.2019**
(21) Anmeldenummer: 15181658.4
(22) Anmeldetag: 20.08.2015
(51) Int. Cl.: B05B 1/18, E03C 1/04, B05B 15/65, F16L 37/098

(54) **SANITÄRBRAUSE**
SANITARY SHOWER
DOUCHE SANITAIRE

(30) Priorität: 26.08.2014 DE 102014216975
(43) Veröffentlichungstag der Anmeldung: 02.03.2016
(73) Patentinhaber: Hansgrohe SE, 77761 Schiltach (DE)
(72) Erfinder: Blessing, Gerd, 78052 VS-Obereschach (DE)
(74) Vertreter: Patentanwälte Ruff, Wilhelm, Beier, Dauster & Partner mbB

(56) Entgegenhaltungen:
- DE-A1-102005 002 426
- DE-U- 1 991 493
- US-A1- 2011 006 514
- US-A1- 2012 266 376

## Beschreibung

Die Erfindung bezieht sich auf eine Sanitärbrause, insbesondere eine Kopfbrause, mit einem Brausekörper mit einem Fluideinlass und einem Fluidauslass und einem Brausekopf, der mit einem Fluideinlass in Verbindung mit dem Fluidauslass des Brausekörpers lösbar am Brausekörper anbringbar ist und einen Brauseauslass zur Bereitstellung eines Brausefluidstrahls aufweist. Bei der Sanitärbrause mit dem Brauseauslass kann es sich z.B. um eine Duschkopfbrause handeln.

Herkömmlicherweise sind der Brausekörper und der Brausekopf der Sanitärbrause z.B. einteilig ausgebildet, oder die beiden müssen mittels einer Schraubverbindung häufig als einmalige Verbindung verbunden werden. Eine Überkopfmontage einer solchen Sanitärbrause an einer Duschkabinen- oder Badezimmerdecke, insbesondere das eventuelle Anschrauben des Brausekörpers am Brausekörper über Kopf, ist jedoch relativ beschwerlich.

Im Stand der Technik werden zum schnellen Anschließen von Sanitärbrausen in verschiedenen Positionen, z.B. bei Seitenbrausen und Kopfbrausen, bereits verschiedentlich Bajonettverschlüsse vorgeschlagen, welche durch Einstecken der jeweiligen Komponente in eine Aufnahme montiert und durch Verdrehen der Komponente in der Aufnahme arretiert werden können, wobei bei diesem allgemein bekannten Arretierungsmechanismus Vorsprünge mit dazu korrespondierenden Nuten in Eingriff gebracht werden. Derartige Bajonettverschlüsse gehen beispielsweise aus der DE 101 41 296 B4 oder auch aus der DE 10 2005 001 301 A1 hervor. Je nach Ausführung besteht bei diesen bekannten Bajonettverschlüssen das Problem, dass sie schwer zu lösen sind, wenn der Bajonettmechanismus sicherheitstechnisch fest rastend ausgeführt ist, oder dass bei Ausführung zum leichten Lösen die Gefahr besteht, dass sich die Verbindung von selbst löst.

Aus der US 2011/0006514 A1 sind ein Brausekopf mit einem Steckverbinder und ein Anschlussstück mit einer beweglichen Befestigungsstruktur bekannt. Der Brausekopf ist an dem Anschlussstück befestigbar, wozu der Steckverbinder in das Anschlussstück eingeschoben und dort gehalten werden kann, indem Rasthaken eines Schnapprings der beweglichen Befestigungsstruktur in einen Hals des Steckverbinders einschnappen.

Dann steht ein Einlassraum des Brausekopfs mittels des Steckverbinders und des Anschlussstücks mit einem deckenseitigen Wasserauslass in Fluidverbindung. Zum Entfernen des Brausekopfs von dem Anschlussstück kann eine Gleithülse der beweglichen Befestigungsstruktur von einer unteren Stellung, in welcher ein Flanschring ein Herausbewegen der Einrasthaken aus dem Hals sperrt, axial in eine obere Stellung gedrückt werden, in welcher sich die Einrasthaken aus dem Hals herausbewegen können.

Des Weiteren zeigt die DE 10 2005 002 426 A1 eine Brause mit einem Gehäuse und einer Wasserzuführung, an der ein Brausekopf mit einer Wasserverteileinrichtung angeordnet ist. An der Wasserzuführung sind federnde Zungen mit Rastnasen ausgebildet. An der Wasserverteileinrichtung ist ein Rohrstutzen mit einem Ringflansch angeformt. Beim Zusammenstecken der Wasserzuführung und des Brausekopfs federn die Rastnasen hinter den Ringflansch und sichern hiermit die axiale Stecklage des Brausekopfs zur Wasserführung. Diese Verbindung ist praktisch unlösbar.

Außerdem sind in der DE 1 991 493 U ein Brausekopf mit einem Steckteil und ein Griffteil mit einem Steckteil versehen, so dass der Brausekopf am Griffteil mit Hilfe einer lösbaren Steckverbindung befestigbar ist. Der Brausekopf ist lediglich aufgeschoben oder eingeschoben.

Der Erfindung liegt als technisches Problem die Bereitstellung einer Sanitärbrause der eingangs genannten Art zugrunde, welche eine anwenderfreundliche und zugleich sichere Montage des Brausekopfs am Brausekörper ermöglicht.

Die Erfindung löst dieses Problem durch die Bereitstellung einer Sanitärbrause mit den Merkmalen des Anspruchs 1. Bei der erfindungsgemäßen Sanitärbrause sind Steckverbindungsmittel für das lösbare Anbringen des Brausekopfs am Brausekörper vorgesehen.

Die erfindungsgemäße Sanitärbrause erlaubt auf vorteilhafte Weise das Verbinden des Brausekopfs mit dem Brausekörper durch das bloße Zusammenstecken der beiden Bauteile, d.h. es ist eine durch Zusammenstecken gebildete formschlüssige Verbindung zwischen dem Brausekopf und dem Brausekörper vorgesehen. Dadurch kann vorteilhaft zuerst der Brausekörper an einer Duschkabinen- oder Badezimmerdecke installiert werden, und anschließend kann der Brausekopf auf diesen einfach, werkzeugfrei und schnell aufgesteckt werden. Dabei werden der Brausekopf und der Brausekörper mechanisch verbunden und der Fluidauslass des Brausekörpers und der Fluideinlass des Brausekopfs werden fluidtechnisch verbunden. Fluidtechnisch verbunden bedeutet, dass ein Fluidfluss zwischen zwei Teilen, vorliegend zwischen dem Fluidauslass des Brausekörpers und dem Fluideinlass des Brausekopfs, möglich ist. Insbesondere ein großer Brausekopf mit einem Brauseauslass in Form von vielen Strahlaustrittsöffnungen in einer Strahlscheibe kann ein entsprechend hohes Gewicht aufweisen. Vorteilhafterweise muss bei einer Überkopfmontage der Brausekopf nicht für lange Zeit vom Installateur gehalten und gleichzeitig angeschraubt werden, sondern nur angehoben und aufgesteckt werden. Wenn der Brausekopf mit dem Brausekörper verbunden ist, kann er sich nicht mehr von selbst von dem Brausekörper lösen. Die Steckverbindungsmittel können vom Installateur z.B. zu Reinigungs- oder Reparaturzwecken gelöst werden, womit der Brausekopf vom Brausekörper leicht abgenommen werden kann und nach einer Reinigung oder Reparatur wieder montiert werden kann. Ein Teil des Brausekopfs, der mindestens einen Teil der Steckverbindungsmittel aufweist, wird vorliegend auch als Anschlussteil bezeichnet, und ein übriger Teil der Brause als Brauseteil.

Der Fluideinlass des Brausekörpers kann zum Anschluss z.B. an eine Wasserzuleitung eines Misch- und/oder Umschaltventils dienen. Ein Brausekopf kann eine Mehrzahl von Brauseauslässen in Form von Gruppen von Strahlaustrittsöffnungen in einer Strahlscheibe umfassen, wobei die Brauseauslässe getrennt voneinander mit Wasser versorgt werden können, um verschiedene Duschstrahlbilder zu erzeugen. Insbesondere bei einer Kopfbrause kann an einer seitlichen Wand z.B. einer Duschkabine ein Wandelement vorgesehen sein, mittels dessen die Brauseauslässe getrennt voneinander angesteuert werden können. Dabei kann eine der Mehrzahl der Brauseauslässe entsprechende Mehrzahl von Fluidleitungen von dem Wandelement zu der Sanitärbrause führen. Entsprechend der Mehrzahl der Brauseauslässe des Brausekopfs kann vorteilhafterweise der Brausekopf eine Mehrzahl von Fluideinlässen umfassen und der Brausekörper kann vorteilhafterweise eine Mehrzahl von Fluideinlässen und Fluidauslässen umfassen, wobei die Fluidauslässe des Brausekörpers mit den Fluideinlässen des Brausekopfs in montiertem Zustand korrespondieren.

Die Steckverbindungsmittel weisen wenigstens eine Schnappnase und eine korrespondierende Schnappöffnung auf, in welche die Schnappnase rastend einschnappbar ist, d.h. es ist eine durch Einschnappen gebildete formschlüssige Verbindung zwischen dem Brausekopf und dem Brausekörper realisiert. Beim Zusammenstecken des Brausekopfs und des Brausekörpers schnappt die wenigstens eine Schnappnase in die korrespondierende Schnappöffnung ein, d.h. die Schnappnase verformt sich elastisch und verhakt sich anschließend in der Schnappöffnung. Zu diesem Zweck ist die wenigstens eine Schnappnase geeignet aus einem Werkstoff mit elastischen Eigenschaften gefertigt, wie z.B. einem elastischen Metall- oder Kunststoffmaterial. Damit lässt sich der Brausekopf auf vorteilhafte Weise in einer axialen Richtung gegen Lösen von dem Brausekörper sichern. Vorteilhaft können die Steckverbindungsmittel eine Anschlagbegrenzung aufweisen, die das Zusammenstecken des Brausekopfs und des Brausekörpers in der axialen Zusammensteckrichtung limitieren kann, wodurch die Schnappverbindung in diesem Fall nur in der entgegengesetzten Richtung den Brausekopf zu sichern braucht.

Die Steckverbindungsmittel beinhalten ein erstes Kupplungsringteil am Brausekörper und ein zweites Kupplungsringteil am Brausekopf, das koaxial mit dem ersten Kupplungsringteil lösbar zusammensteckbar ist, wobei am einen Kupplungsringteil die Schnappöffnung vorgesehen ist und am anderen Kupplungsringteil die Schnappnase in radialer Richtung schnappbeweglich angeordnet ist. Im verbundenen Zustand kann vorteilhafterweise das zweite Kupplungsringteil mindestens teilweise das erste Kupplungsringteil umfassen bzw. das erste Kupplungsringteil kann mindestens teilweise das zweite Kupplungsringteil umfassen, wodurch eine formschlüssige Verbindung zwischen dem ersten Kupplungsringteil und dem zweiten Kupplungsringteil in radialer Richtung senkrecht zur axialen Richtung vorhanden sein kann. Das eine Kupplungsringteil kann das erste oder das zweite Kupplungsringteil sein, und das andere Kupplungsringteil kann entsprechend das zweite oder das erste Kupplungsringteil sein. Beim Zusammenstecken des Brausekopfs und des Brausekörpers schnappt die in radialer Richtung schnappbeweglich angeordnete Schnappnase in die Schnappöffnung ein, d.h. die Schnappnase schnappt von radial innen nach radial außen oder von radial außen nach radial innen in die ihr dabei gegenüberliegende Schnappöffnung ein.

Die Steckverbindungsmittel beinhalten gemäß der Erfindung einen Sicherungsring, der koaxial zu dem die Schnappnase aufweisenden Kupplungsringteil gegenüber diesem drehbeweglich angeordnet ist, wobei er in einer Blockierstellung gegen ein Herausbewegen der Schnappnase aus der Schnappöffnung sichert und in einer gegenüber der Blockierstellung verdrehten Freigabestellung ein Herausbewegen der Schnappnase aus der Schnappöffnung freigibt. Der Sicherungsring erlaubt ein besonders einfaches Lösen der Steckverbindung. Vorteilhafterweise kann der Sicherungsring derart an dem die Schnappnase aufweisenden Kupplungsringteil angeordnet sein, dass ein Installateur leicht eine Verdrehung des Sicherungsrings bewirken kann. Vorteilhaft können die Steckverbindungsmittel eine Feder umfassen, die den drehbeweglichen Sicherungsring in Richtung der Blockierstellung beaufschlagen kann.

Vorteilhaft sind in einer Weiterbildung der Erfindung mehrere Schnappnasen und mehrere Schnappöffnungen umfangsseitig verteilt angeordnet.

In einer Ausgestaltung der Erfindung beinhalten die Steckverbindungsmittel ein Verdrehsicherungselement, mit dem der Sicherungsring in der Blockierstellung verdrehgesichert fixierbar ist. Somit kann ein unbeabsichtigtes Verdrehen des Sicherungsrings aus der Blockierstellung in die Freigabestellung vermieden werden. Vorteilhafterweise kann es sich bei dem Verdrehsicherungselement um eine Schraube handeln, die in dem Sicherungsring gehalten sein kann und in der Blockierstellung des Sicherungsrings in eine radial zu ihr ausgerichtete Schrauböffnung eingeschraubt werden kann, die in dem die Schnappnase aufweisenden Kupplungsringteil vorgesehen sein kann.

In einer Ausgestaltung der Erfindung weist der Sicherungsring an einer der Schnappnase zugewandten Seite eine Ausnehmung auf, in welche die Schnappnase zum Herausbewegen aus der Schnappöffnung hineinbewegbar ist, wenn sich der Sicherungsring in der Freigabestellung befindet, und die in Umfangsrichtung zur Schnappnase versetzt ist, wenn sich der Sicherungsring in der Blockierstellung befindet. Vorteilhafterweise kann die Schnappnase und/oder die Schnappöffnung derart geformt sein, dass sich die Schnappnase bei einem Lösen des Brausekopfs vom Brausekörper, wenn sich der Sicherungsring in der Freigabestellung befindet, in radialer Richtung in die Ausnehmung hineinbewegen kann.

In einer Ausgestaltung der Erfindung weist der Sicherungsring an einer der Schnappnase zugewandten Seite eine Ausnehmung auf, in welche die Schnappnase zum Herausbewegen aus der Schnappöffnung hineinbewegbar ist, wenn sich der Sicherungsring in der Freigabestellung befindet, und die in Axialrichtung zur Schnappnase versetzt ist, wenn sich der Sicherungsring in der Blockierstellung befindet. Vorteilhafterweise kann die Schnappnase und/oder die Schnappöffnung derart geformt sein, dass sich die Schnappnase bei einem Lösen des Brausekopfs vom Brausekörper, wenn sich der Sicherungsring in der Freigabestellung befindet, in radialer Richtung in die Ausnehmung hineinbewegen kann.

In einer Ausgestaltung der Erfindung ist der eine Kupplungsringteil mit wenigstens einem axial verlaufenen Führungssteg und der andere Kupplungsringteil mit wenigstens einer axial verlaufenden, mit dem Führungssteg zusammenwirkenden Führungsnut versehen. Dies erlaubt eine Ausrichtung des Brausekopfs gegenüber dem Brausekörper in Drehrichtung um eine Längsachse des Kupplungsringteils des Brausekopfs während der Montage und gewährleistet im Betrieb die Beibehaltung dieser Ausrichtung.

Vorteilhafte Ausführungsformen der Erfindung sind in den Zeichnungen dargestellt und werden nachfolgend beschrieben. Hierbei zeigen:
- Fig. 1: eine Längsschnittansicht eines Brausekopfs mit einem Anschlussteil und einem Brauseteil,
- Fig. 2: eine ausschnittsweise Draufsicht auf den Brausekopf von Fig. 1 mit einem Sicherungsring,
- Fig. 3: eine ausschnittsweise Querschnittansicht einer Sanitärbrause mit einem Brausekörper mit einem ersten Kupplungsringteil und mit dem Brausekopf von Fig. 1 mit einem zweiten Kupplungsringteil und dem Sicherungsring in Freigabestellung,
- Fig. 4: eine Querschnittansicht entsprechend Fig. 3 mit dem Sicherungsring in Blockierstellung,
- Fig. 5: eine Längsschnittansicht der Sanitärbrause von Fig. 3 mit dem Sicherungsring in Blockierstellung und
- Fig. 6: eine Längsschnittansicht entsprechend Fig. 4 mit dem Sicherungsring in Freigabestellung.

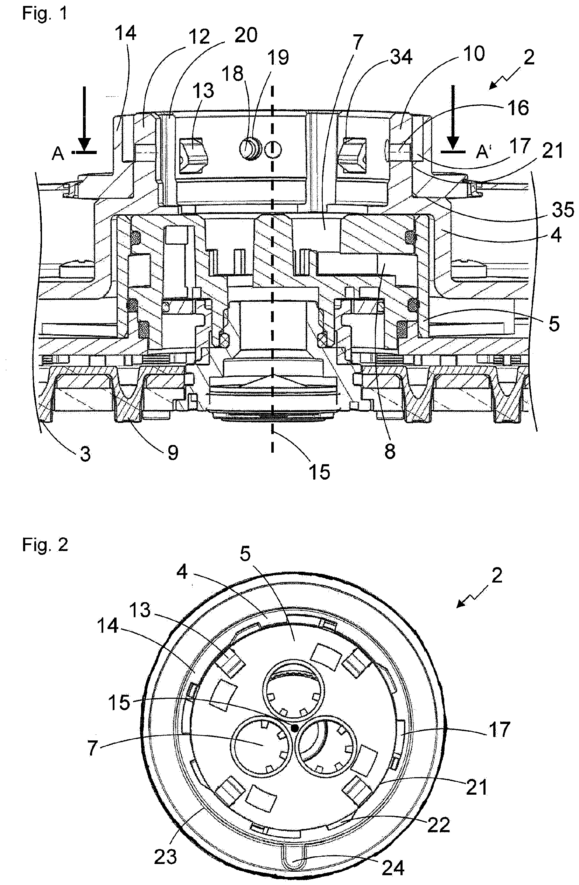

Ein in Fig. 1 gezeigter Brausekopf 2 einer Sanitärbrause mit einer Strahlscheibe 3 eignet sich beispielsweise als Duschbrausekopf. Der Brausekopf 2 umfasst einen Anschlussteil 4 und einen Brauseteil 5, die in der Regel bereits werksseitig miteinander verbunden sind, bevorzugt mittels Schrauben. Der Brauseteil 5 weist drei Fluideinlässe 7 auf, die jeweils über Kanäle 8 mit drei Brauseauslässen 9 in Form von drei Gruppen an Strahlaustrittsöffnungen in der Strahlscheibe 3 fluidtechnisch verbunden sind. Die Brauseauslässe 9 können somit getrennt voneinander mit Fluid versorgt werden.

Der Anschlussteil 4 ist Teil von Steckverbindungsmitteln 10 zum lösbaren Anbringen des Brausekopfs 2 an einem in Fig. 1 nicht gezeigten Brausekörper der Sanitärbrause. Der Anschlussteil 4 beinhaltet ein kreisrundes Kupplungsringteil 12, an bzw. in dem vier Schnappnasen 13 in vier Ausnehmungen 34 angeordnet sind. Des Weiteren beinhaltet der Anschlussteil 4 einen kreisrunden Sicherungsring 14, der koaxial zu dem Kupplungsringteil 12 gegenüber diesem drehbeweglich angeordnet ist, wobei er diesen umfasst und damit in radialer Richtung senkrecht zu einer Längsachse 15 des Kupplungsringteils 12 formschlüssig mit diesem verbunden ist. Axial entlang der Längsachse 15 ist der Sicherungsring 14 gegenüber dem Kupplungsringteil 12 durch Anlage an einem Absatz 35 des Anschlussteils 4 und durch in Fig. 1 vier nicht gezeigte Haltestifte gesichert. Dazu sind vier Haltestiftöffnungen 16 in dem Kupplungsringteil 12 und vier Haltestiftausnehmungen 17 an einer dem Kupplungsringteil 12 zugewandten Innenseite 21 in dem Sicherungsring 14 für die Haltestifte vorgesehen, in welche die Haltestifte vollständig eingeschoben sein können.

Der Sicherungsring 14 kann in seiner in Fig. 1 gezeigten Blockierstellung durch ein Verdrehsicherungselement der Steckverbindungsmittel 10 in Form einer in Fig.1 nicht gezeigten Schraube verdrehgesichert fixiert werden, wobei die Schraube in einem Schraubgewinde 18 des Sicherungsrings 14 gehalten wird und in eine gegenüber dem Schraubgewinde 18 entsprechend radial ausgerichtete Schrauböffnung 19 des Kupplungsringteils 12 radial von außen eingeschraubt werden kann. Somit wird ein unbeabsichtigtes Verdrehen des Sicherungsrings 14 aus der Blockierstellung in eine Freigabestellung vermieden. Des Weiteren ist der Kupplungsringteil 12 mit vier axial verlaufenden Führungsnuten 20 versehen.

Fig. 2 zeigt eine ausschnittsweise Draufsicht auf den Brausekopf 2, wobei das Kupplungsringteil 12 nicht gezeigt ist. Die drei Fluideinlässe 7 des Brausekopfs 2 sind um die Längsachse 15 herum angeordnet und führen parallel zu dieser in den Brauseteil 5. Des Weiteren sind die vier Schnappnasen 13, die jeweils um 90° zueinander versetzt um die Längsachse 15 angeordnet sind, und der Sicherungsring 14 des Anschlussteils 4 zu erkennen. Neben den vier Haltestiftausnehmungen 17, die jeweils um 90° zueinander versetzt um die Längsachse 15 herum in dem Sicherungsring 14 angeordnet sind, weist der Sicherungsring 14 an der den Schnappnasen 13 zugewandten Innenseite 21 vier Ausnehmungen 22, die jeweils um 90° zueinander versetzt um die Längsachse 15 angeordnet sind, und an einer der Innenseite 21 radial gegenüberliegenden Außenseite 23 einen Bedienknauf 24 auf. Wenn der Sicherungsring 14 in der Blockierstellung nicht verdrehgesichert fixiert ist, kann ein Nutzer mittels des Bedienknaufs 24 eine Verdrehung des Sicherungsrings 14 gegenüber dem zweiten Kupplungsringteil 12 um die Längsachse 15 bewirken, wobei eine Verdrehung des Sicherungsrings 14 durch das Zusammenwirken der in Fig. 2 nicht gezeigten Haltestifte und der Haltestiftausnehmungen 17 auf einen begrenzten Winkelbereich limitiert ist.

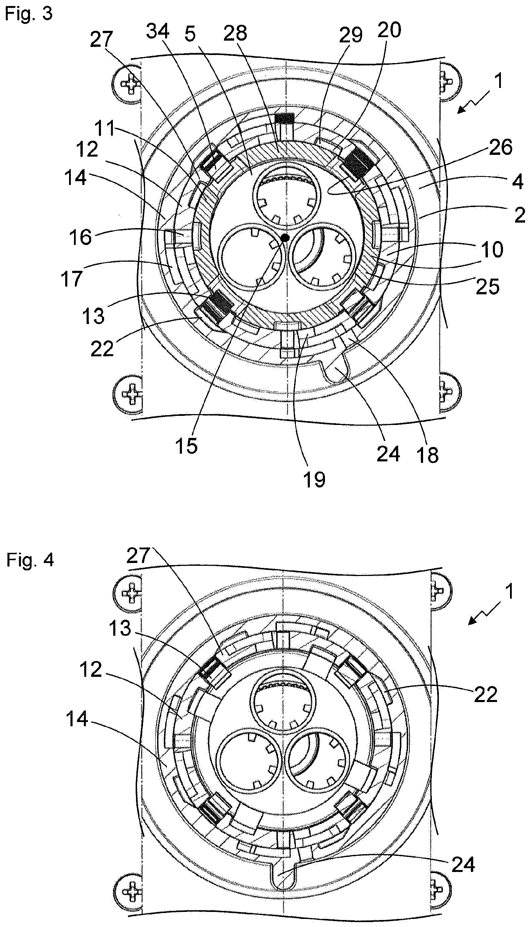

Fig. 3 zeigt eine ausschnittsweise Querschnittansicht der Sanitärbrause 1 in montiertem Zustand mit dem Brausekörper 11 und dem Brausekopf 2 entlang einer Schnittlinie A-A' des Brausekopfs 2 in Fig. 1. Der Brausekopf 2 ist mittels der Steckverbindungsmittel 10 lösbar an dem Brausekörper 11 angebracht. Die Steckverbindungsmittel 10 umfassen neben dem Anschlussteil 4 an dem Brausekopf 2, insbesondere dem Kupplungsringteil 12 mit den Schnappnasen 13, einen kreisrunden Kupplungsringteil 25 an dem Brausekörper 11, wobei dieses Kupplungsringteil 25 und das Kupplungsringteil 12 koaxial zu sammengesteckt sind, indem das Kupplungsringteil 12 das Kupplungsringteil 25 umfasst und damit in radialer Richtung formschlüssig mit diesem verbunden ist. An dem Kupplungsringteil 25 sind vier Schnappöffnungen 26 vorhanden, die jeweils um 90° zueinander versetzt um die Längsachse 15 angeordnet sind.

Beim Zusammenstecken des Brausekopfs 2 und des Brausekörpers 11 sind die Schnappnasen 13, die in radialer Richtung nach innen zur Längsachse 15 schnappbeweglich in den Schnappnasenausnehmungen 34 angeordnet sind, in die korrespondierenden, ihnen radial gegenüberliegenden Schnappöffnungen 26 rastend eingeschnappt. Durch die gleichmäßig verteilte Anordnung der Schnappnasen 13 über einen Umfang 27 des Kupplungsringteils 12 und durch die gleichmäßig verteilte Anordnung der Schnappöffnungen 26 über einen Umfang 28 des Kupplungsringteils 25 verteilen sich Haltekräfte gleichmäßig über deren Umfänge 27, 28.

Des Weiteren ist der Kupplungsringteil 25 mit vier axial verlaufenden Führungsstegen 29 versehen, welche jeweils um 90° zueinander versetzt um die Längsachse 15 angeordnet sind und in welche die vier Führungsnuten 20 des zweiten Kupplungsringteils 12 eingreifen, wobei die vier Führungsnuten 20 des zweiten Kupplungsringteils 12 ebenfalls um 90° zueinander versetzt um die Längsachse 15 angeordnet sind. Somit ist ein Verdrehen des Brausekopfs 2 gegenüber dem Brausekörper 11 um die Längsachse 15 blockiert.

In der in Fig. 3 gezeigten Freigabestellung des Sicherungsrings 14, in welcher er gegenüber der in den Fig. 1 und 2 gezeigten Blockierstellung um wenige Grad gegen den Uhrzeigersinn verdreht ist, wie an der Drehstellung des Bedienknaufs 24 zu erkennen, sind die vier Ausnehmungen 22 den vier Schnappnasen 13 gegenüberliegend ausgerichtet, so dass sich die Schnappnasen 13 zum Herausbewegen aus den Schnappöffnungen 26 in die Ausnehmungen 22 hineinbewegen können. Somit gibt der Sicherungsring 14 ein Lösen des Brausekopfs 2 vom Brausekörper 11 frei. In der in Fig. 4 gezeigten Blockierstellung des Sicherungsrings 14 sind die Ausnehmungen 22 in Umfangsrichtung entlang des Umfang 27 des Kupplungsringteils 12 zu den Schnappnasen 13 versetzt, wodurch der Sicherungsring 14 ein Herausbewegen der Schnappnasen 13 aus den Schnappöffnungen 26 des in Fig. 4 nicht gezeigten Kupplungsringteils 25 blockiert.

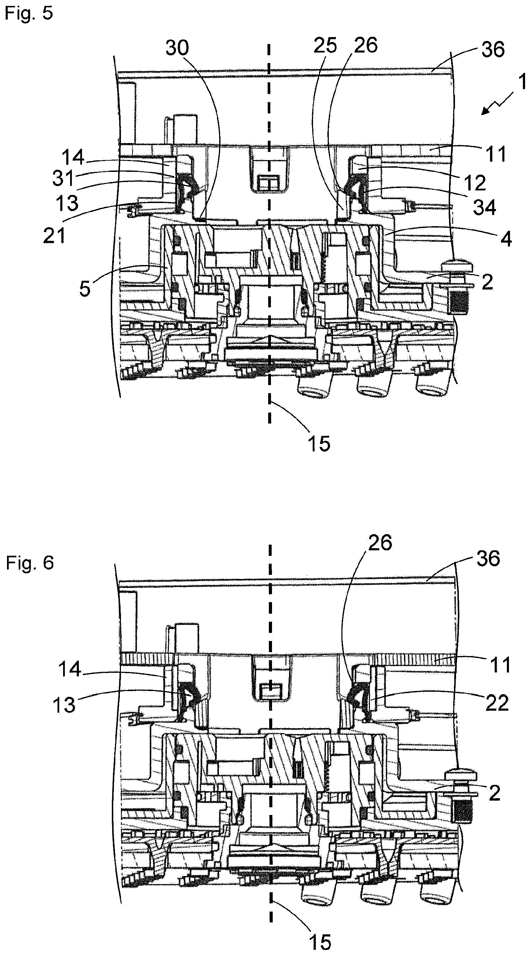

Fig. 5 zeigt einen Längsschnitt der Sanitärbrause 1 mit dem Brausekopf 2 und dem Brausekörper 11, wobei die Sanitärbrause 1 mit dem Brausekopf 2 in der Längsschnittansicht der Fig. 5 gegenüber der Längsschnittansicht des Brausekopfs 2 der Fig. 1 um 45° um die Längsachse 15 des Kupplungsringteils 12 gedreht ist. Die Schnappnasen 13 sind in den Ausnehmungen 34 in axialer Richtung, in Umfangsrichtung und radial nach innen zur Längsachse 15 durch den Kupplungsringteil 12 gesichert. Jeweils mit einer Rückseite 31 liegen die Schnappnasen 13 an der Innenseite 21 des Sicherungsrings 14 an. Der Sicherungsring 14 befindet sich in seiner Blockierstellung und blockiert dadurch ein Herausbewegen der Schnappnasen 13 aus den Schnappöffnungen 26. Die Schnappnasen 13 weisen eine gebogene Federform auf, wodurch diese beim Zusammenstecken des Brausekopfs 2 und des Brausekörpers 11 in radialer Richtung nach innen in die Schnappöffnungen 26 rastend einschnappen können, d.h. die Schnappnasen 13 haben sich elastisch verformt und sind in den Schnappöffnungen 26 verhakt. Zu diesem Zweck sind die Schnappnasen 13 aus einem Werkstoff mit elastischen Eigenschaften, wie z.B. einem elastischen Metall- oder Kunststoffmaterial, gefertigt.

Somit sind der Brausekopf 2 und der Brausekörper 11 in axialer Richtung formschlüssig miteinander verbunden, und der Brausekopf 2 ist in axialer Richtung gegen Lösen von dem Brausekörper 11 gesichert. In entgegengesetzter axialer Richtung limitiert eine Anschlagbegrenzung 30 der Steckverbindungsmittel 10 in Form eines Kragens an dem Anschlussteil 4 das Zusammenstecken des Brausekopfs 2 und des Brausekörpers 11, wobei der Kupplungsringteil 25 an der Anschlagbegrenzung 30 anliegt.

Zum Zusammenstecken des Brausekopfs 2 und des Brausekörpers 11 kann sich der Sicherungsring 14 in seiner Blockierstellung befinden. Zum Lösen des Brausekopfs 2 von dem Brausekörper 11 muss sich der Sicherungsring 14 in seiner Freigabestellung befinden, wie in Fig. 6 gezeigt. Die Schnappnasen 13 und die Schnappöffnungen 26 sind derart geformt, dass sich die Schnappnasen 13 bei einem Auseinanderziehen des Brausekopfs 2 und des Brausekörpers 11 aus den Schnappöffnungen 26 in die Ausnehmungen 22 hineinbewegen können, wodurch sich der Brausekopf 2 von dem Brausekörper 11 lösen lässt.

Der Brausekörper 11 oder Brausearm kann mit einer Befestigungsrückseite 36 an einer Duschkabinen- oder Badezimmerdecke befestigt werden. Die Steckverbindungsmittel 10 können als Schnellverbindungsmittel bezeichnet werden, mittels derer sich der Brausekopf 2 leicht am Brausekörper 11, insbesondere auch per Überkopfmontage, anbringen und wieder von diesem lösen lässt.

In der Ausführungsform der Fig. 1 bis 6 ist der Sicherungsring gegenüber dem zweiten Kupplungsringteil drehbeweglich angeordnet. Alternativ dazu kann z.B. der Sicherungsring gegenüber dem zweiten Kupplungsringteil dreh- und axialbeweglich angeordnet sein.

Des Weiteren umgibt in den gezeigten Ausführungsformen das zweite Kupplungsringteil 12 das erste Kupplungsringteil 25. Alternativ dazu kann das erste Kupplungsringteil das zweite Kupplungsringteil umgeben. Außerdem sind in den gezeigten Ausführungsformen die Schnappnasen an dem zweiten Kupplungsringteil angeordnet. Zusätzlich oder alternativ dazu können Schnappnasen an dem ersten Kupplungsringteil angebracht sein. Insbesondere kann dann der Sicherungsring gegenüber dem ersten Kupplungsringteil beweglich angeordnet sein.

In der Ausführungsform der Fig. 1 bis 6 ist das erste Kupplungsringteil mit vier axial verlaufenden Führungsstegen versehen, und das zweite Kupplungsringteil ist mit vier korrespondierenden, axial verlaufenden Führungsnuten versehen. Generell sind die Anzahl und die Anordnung der Führungsstege und der Führungsnuten variabel. Des Weiteren sind generell die Anzahl und die Anordnung an Schnappnasen und entsprechend die Anzahl und die Anordnung an Schnappöffnungen, die Anzahl und die Anordnung an Ausnehmungen und die Anzahl und die Anordnung an Schnappnasenausnehmungen variabel. Außerdem sind generell die Anzahl und die Anordnung an Haltestiftöffnungen und entsprechend die Anzahl und die Anordnung an Haltestiftausnehmungen variabel bzw. sind generell die Anzahl und die Anordnung an ersten Anschlagkörpern und entsprechend die Anzahl und die Anordnung an Anschlagkörperausnehmungen variabel.

In den Figuren sind Fluideinlässe des Brausekörpers nicht gezeigt. Generell weist der Brausekörper einen oder mehrere Fluideinlässe und eine Anzahl an Fluidauslässen auf, die der Anzahl der Brauseauslässe des Brausekopfs entsprechen kann, wobei generell die Anzahl an Brauseauslässen variabel ist und wobei die Fluideinlässe des Brausekopfs mit den Fluidauslässen des Brausekörpers beim Zusammenstecken des Brausekopfs und des Brausekörpers fluidtechnisch verbunden werden.

Wie die gezeigten und oben erläuterten Ausführungsbeispiele deutlich machen, stellt die Erfindung eine vorteilhafte Sanitärbrause zur Verfügung, die Steckverbindungsmittel für das lösbare Anbringen eines Brausekopfs an einem Brausekörper der Sanitärbrause verwendet und somit eine anwenderfreundliche Montage des Brausekopfs am Brausekörper ermöglicht.

## Patentansprüche

1. Sanitärbrause (1), insbesondere Kopfbrause, mit
- einem Brausekörper (11) mit einem Fluideinlass und einem Fluidauslass (37),
- einem Brausekopf (2), der mit einem Fluideinlass (7) in Verbindung mit dem Fluidauslass des Brausekörpers lösbar am Brausekörper anbringbar ist und einen Brauseauslass (9) zur Bereitstellung eines Brausefluidstrahls aufweist, und
- Steckverbindungsmitteln (10) für das lösbare Anbringen des Brausekopfs (2) am Brausekörper (11),
**dadurch gekennzeichnet, dass**
- die Steckverbindungsmittel (10) wenigstens eine Schnappnase (13) und eine korrespondierende Schnappöffnung (26) aufweisen, in welche die Schnappnase rastend einschnappbar ist,
- die Steckverbindungsmittel (10) ein erstes Kupplungsringteil (25) am Brausekörper (11) und ein zweites Kupplungsringteil (12) am Brausekopf (2) beinhalten, das koaxial mit dem ersten Kupplungsringteil lösbar zusammensteckbar ist, wobei am einen Kupplungsringteil die Schnappöffnung (26) vorgesehen ist und am anderen Kupplungsringteil die Schnappnase (13) in radialer Richtung schnappbeweglich angeordnet ist, und
- die Steckverbindungsmittel (10) einen Sicherungsring (14) beinhalten, der koaxial zu dem die Schnappnase (13) aufweisenden Kupplungsringteil (12) gegenüber diesem drehbeweglich angeordnet ist, wobei er in einer Blockierstellung gegen ein Herausbewegen der Schnappnase aus der Schnappöffnung (26) sichert und in einer gegenüber der Blockierstellung verdrehten Freigabestellung ein Herausbewegen der Schnappnase aus der Schnappöffnung freigibt.

2. Sanitärbrause nach Anspruch 1, weiter **dadurch gekennzeichnet, dass** mehrere Schnappnasen (13) und mehrere Schnappöffnungen (26) umfangsseitig verteilt angeordnet sind.

3. Sanitärbrause nach Anspruch 1 oder 2, weiter **dadurch gekennzeichnet, dass** die Steckverbindungsmittel (10) ein Verdrehsicherungselement beinhalten, mit dem der Sicherungsring (14) in der Blockierstellung verdrehgesichert fixierbar ist.

4. Sanitärbrause nach einem der Ansprüche 1 bis 3, weiter **dadurch gekennzeichnet, dass** der Sicherungsring (14) an einer der Schnappnase (13) zugewandten Seite (21) eine Ausnehmung (22) aufweist, in welche die Schnappnase zum Herausbewegen aus der Schnappöffnung (26) hineinbewegbar ist, wenn sich der Sicherungsring in der Freigabestellung befindet, und die in Umfangsrichtung zur Schnappnase versetzt ist, wenn sich der Sicherungsring in der Blockierstellung befindet.

5. Sanitärbrause nach einem der Ansprüche 1 bis 4, weiter **dadurch gekennzeichnet, dass** der eine Kupplungsringteil (25) mit wenigstens einem axial verlaufenen Führungssteg (29) und der andere Kupplungsringteil (12) mit wenigstens einer axial verlaufenden, mit dem Führungssteg zusammenwirkenden Führungsnut (20) versehen ist.

## Claims

1. A sanitary shower (1), in particular an overhead shower, comprising
- a shower body (11) including a fluid inlet and a fluid outlet (37),
- a shower head (2) which is removably attachable to the shower body with a fluid inlet (7) in connection with the fluid outlet of the shower body and includes a shower outlet (9) for providing a shower fluid jet, and
- plug-on connector means (10) for removably attaching the shower head (2) to the shower body (11),
**characterized in that**
- the plug-on connector means (10) have at least one latching lug (13) and a corresponding latching hole (26) in which the latching lug is lockable by latching on,
- the plug-on connector means (10) include a first coupling ring part (25) on the shower body (11) and a second coupling ring part (12) on the shower head (2), which second coupling ring part is removably connectable to the first coupling ring part by coaxial insertion, wherein on one coupling ring part the latching hole (26) is provided and on the other coupling ring part the latching lug (13) is disposed to be snappingly movable in the radial direction, and
- the plug-on connector means (10) include a locking ring (14) which is disposed coaxially in relation to the coupling ring part (12) including the latching lug (13) and rotatable relative thereto, wherein the locking ring in a blocking position secures against removing of the latching lug from the latching hole (26) and in an enable position, twisted relative to the blocking position, enables removing of the latching lug from the latching hole.

2. The sanitary shower according to claim 1, further **characterized in that** a plurality of latching lugs (13) and a plurality of latching holes (26) are disposed in a circumferentially distributed manner.

3. The sanitary shower according to claim 1 or 2, further **characterized in that** the plug-on connector means (10) include an anti-twist locking element by means of which the locking ring (14) is fixable in the blocking position and secured against rotation.

4. The sanitary shower according to any one of the claims 1 to 3, further **characterized in that** the locking ring (14) has a recess (22) on a side (21) facing the latching lug (13) into which recess the latching lug is movable for removing from the latching hole (26), when the locking ring is in the enable position, and which recess is displaced in relation to the latching lug in the circumferential direction, when the locking ring is in the blocking position.

5. The sanitary shower according to any one of the claims 1 to 4, further **characterized in that** the one coupling ring part (25) is provided with at least one axially extending guiding ridge (29) and the other coupling ring part (12) is provided with at least one axially extending guiding groove (20) interacting with the guiding ridge.

## Revendications

1. Douche sanitaire (1), en particulier douche de tête, comportant
- un corps de douche (11) pourvu d'une entrée de fluide et d'une sortie de fluide (37),
- une pomme de douche (2) qui est susceptible d'être montée de façon détachable sur le corps de douche en étant en liaison fluidique par une entrée de fluide (7) avec la sortie de fluide du corps de douche et qui comprend une sortie de douche (9) pour fournir un jet de fluide de douche, et
- des moyens de liaison par enfichage (10) pour le montage détachable de la pomme de douche (2) sur le corps de douche (11),
**caractérisée en ce que**
- les moyens de liaison par enfichage (10) présentent au moins un ergot d'encliquetage (13) et une ouverture d'encliquetage correspondante (26) dans laquelle l'ergot d'encliquetage vient s'encliqueter avec enclenchement,
- les moyens de liaison par enfichage (10) contiennent une première partie annulaire d'accouplement (25) sur le corps de douche (11) et une seconde partie annulaire d'accouplement (12) sur la pomme de douche (2), qui est susceptible d'être assemblée par enfichage de façon détachable coaxialement avec la première partie annulaire d'accouplement, l'ouverture d'encliquetage (26) étant prévue sur une partie annulaire d'accouplement et l'ergot d'encliquetage (13) étant agencé sur l'autre partie annulaire d'accouplement de manière à pouvoir être déplacée par encliquetage dans la direction radiale, et
- les moyens de liaison par enfichage (10) contiennent un anneau de blocage (14) qui est disposé coaxialement par rapport à la partie annulaire d'encliquetage (12) pourvue de l'ergot d'encliquetage (13) et de façon mobile en rotation par rapport à celle-ci, et dans une position de blocage, il bloque à l'encontre d'un déplacement de l'ergot d'encliquetage hors de l'ouverture d'encliquetage (26), et dans une position de libération tournée par rapport à la position de blocage, il libère un mouvement de l'ergot d'encliquetage hors de l'ouverture d'encliquetage.

2. Douche sanitaire selon la revendication 1,
**caractérisée en outre en ce que** plusieurs ergots d'encliquetage (13) et plusieurs ouvertures d'encliquetage (26) sont disposés en répartition périphérique.

3. Douche sanitaire selon la revendication 1 ou 2,
**caractérisée en outre en ce que** les moyens de liaison par enfichage (10) contiennent un élément de blocage anti-rotation par lequel l'anneau de blocage (14) peut être fixé dans la position de blocage en étant bloqué à l'encontre d'une rotation.

4. Douche sanitaire selon l'une des revendications 1 à 3,
**caractérisée en outre en ce que** sur un côté (21) tourné vers l'ergot d'encliquetage (13), l'anneau de blocage (14) présente un évidement (22) jusque dans lequel l'ergot d'encliquetage peut être déplacé pour permettre un déplacement hors de l'ouverture d'encliquetage (26), lorsque l'anneau de blocage se trouve dans la position de libération, et qui est décalé en direction périphérique par rapport à l'ergot d'encliquetage lorsque l'anneau de blocage se trouve dans la position de blocage.

5. Douche sanitaire selon l'une des revendications 1 à 4,
**caractérisée en outre en ce que** ladite partie annulaire d'accouplement (25) est pourvue d'au moins une barrette de guidage (29) s'étendant axialement, et l'autre partie annulaire d'accouplement (12) est pourvue d'au moins une rainure de guidage (20) s'étendant axialement et coopérant avec la barrette de guidage.
